# EUROPÄISCHE PATENTANMELDUNG

(11) **EP 2 725 221 A1**
(43) Veröffentlichungstag der Anmeldung: **30.04.2014**
(21) Anmeldenummer: 13188457.9
(22) Anmeldetag: 14.10.2013
(51) Int. Cl.: F03D 3/00, F03D 3/06

(54) **Windgenerator zur Erzeugung von Strom aus Wind**

(30) Priorität: 25.10.2012 BE 201200730
(71) Anmelder: Andre Jacobs sarl, 9991 Weiswampach (LU)
(72) Erfinder: Jacobs, André, B-4770 BORN/AMEL (BE)
(74) Vertreter: Pronovem

(57) **Zusammenfassung**

Bei einem Windgenerator zur Erzeugung von Strom aus Wind mit einer vertikalen Drehachse, wobei an Hebelarmen angebrachte Halbschalen um die vertikale Achse rotieren, soll der Luftwinderstand verbessert werden. Dies wird erreicht, indem die Halbschalen eine Vielzahl nach außen gerichteter Buckel aufweisen.

## Beschreibung

Die Erfindung betrifft einen Windgenerator zur Erzeugung von Strom aus Wind mit einer vertikalen Drehachse, wobei an Hebelarmen angebrachte Halbschalen als Windauffangflächen um die vertikale Achse rotieren.

Derartige Windgeneratoren sind beispielsweise aus der DE 20 2011 105 280 U1 und der DE 20 2011 109 031 U1 bekannt.

Der Erfindung liegt die Aufgabe zugrunde, einen Windgenerator der eingangsgenannten Art zu schaffen, der besonders effektiv arbeitet und insbesondere in aerodynamischer Hinsicht verbessert ist.

Bei einem Windgenerator oder einer Windkraftanlage zur Erzeugung von Strom aus Wind mit einer vertikalen Achse, an der um die vertikale Achse drehbare Halbschalen angeordnet sind, ist erfindungswesentlich vorgesehen, dass die Halbschalen eine Vielzahl nach außen gewölbter Buckel aufweisen.

Bei der Windkraftanalage handelt es sich um einen Widerstandsläufer. Eine Mehrzahl von offenen Halbschalen, die grundsätzlich verschiedene Formen haben können, dienen als Windauffangflächen. Die offene Fläche nimmt dabei den Wind auf, während die geschlossene Fläche in den Wind gedreht wird. Erfindungsgemäß sind auf der geschlossenen Seite der Halbschale nach außen gewölbte Buckel angeordnet, durch die der Windwiderstand der sich in den Wind drehenden Halbschalen gesenkt wird. Die Buckel sind bevorzugt etwa kreisförmig ausgebildet.

Bevorzugt bilden die Buckel ein Segment einer Kugeloberfläche aus. In einer anderen bevorzugten Weiterentwicklung der Erfindung sind die Buckel ringartig um das Zentrum der Halbschale angeordnet. Die verschiedenen Buckel sind dabei bevorzugt so angeordnet, dass diese sich nicht überschneiden und zwischen den Buckeln jeweils ein Teil, insbesondere mit glatter Oberfläche, der Halbschale bleibt.

In einer anderen bevorzugten Weiterentwicklung der Erfindung sind in mindestens einem Buckel mehrere nach innen gerichtete Dellen angeordnet. Bevorzugt sind in jedem Buckel eine Vielzahl von Dellen vorgesehen.

In einer bevorzugten Ausgestaltung der Erfindung ist der Durchmesser einer Halbschale um dem Faktor vier bis zehn, insbesondere um den Faktor fünf bis acht größer als der Durchmesser eines Buckels. In einer bevorzugten Ausgestaltung ist der Durchmessers eines Buckels um dem Faktor zehn bis 30, größer, insbesondere um den Faktor 15 bis 25 größer als der Durchmesser einer Delle.

Eine weitere Weiterentwicklung der Erfindung besteht darin, dass die Halbschalen nahezu halbkugelartig ausgebildet sind. Bevorzugt sind die Halbschalen dabei etwas oval ausgebildet. In einer günstigen Ausgestaltung sind mehrere verbundene Halbschalen nebeneinander angeordnet. Dabei ist die Ausgestaltung bevorzugt so, dass die miteinander verbundenen Halbschalen im Bereich ihrer längeren Seite bei einem ovalen Querschnitt der Halbschalen miteinander verbunden sind. In einer bevorzugten Ausgestaltung der Erfindung sind in einer horizontalen Ebene fünf Halbschalen unter einem Winkel von 72° angeordnet. Grundsätzlich können auch drei oder vier Halbschalen auf einer Ebene angeordnet sein. Dabei kann jede Halbschale eine mehrfache Fortsetzung erfahren, insbesondere sind in einer bevorzugten Ausführungsform vier Halbschalen an einem Hebelarm miteinander verbunden. Bei einer Aufteilung in fünf Winkel ergeben sich damit in einer Ebene 20 Halbschalen, die als Windauffangflächen dienen. Bevorzugt sind an der vertikalen Welle in mehreren Ebenen Hebelarme mit daran angeordneten Halbschalen vorgesehen.

Nachfolgend wird die Erfindung anhand der in den Zeichnungen dargestellten Ausführungsbeispielen weiter erläutert. Im Einzelnen zeigen die schematischen Darstellungen in:
- Fig. 1: Eine schematische Ansicht eines Teils der erfindungsgemäßen Windkraftanlage;
- Fig. 2: Eine Seitenansicht der erfindungsgemäßen Halbschalen der Windkraftanlage;
- Fig. 3: Die Halbschale der erfindungsgemäßen Windkraftanlage in einer Ansicht entlang der Linie III-III in Fig. 2;
- Fig. 4: Eine perspektivische Ansicht der Welle oberhalb des Flansches;
- Fig. 5: Eine Draufsicht auf die Welle mit den daran montierten Hebelarmen.

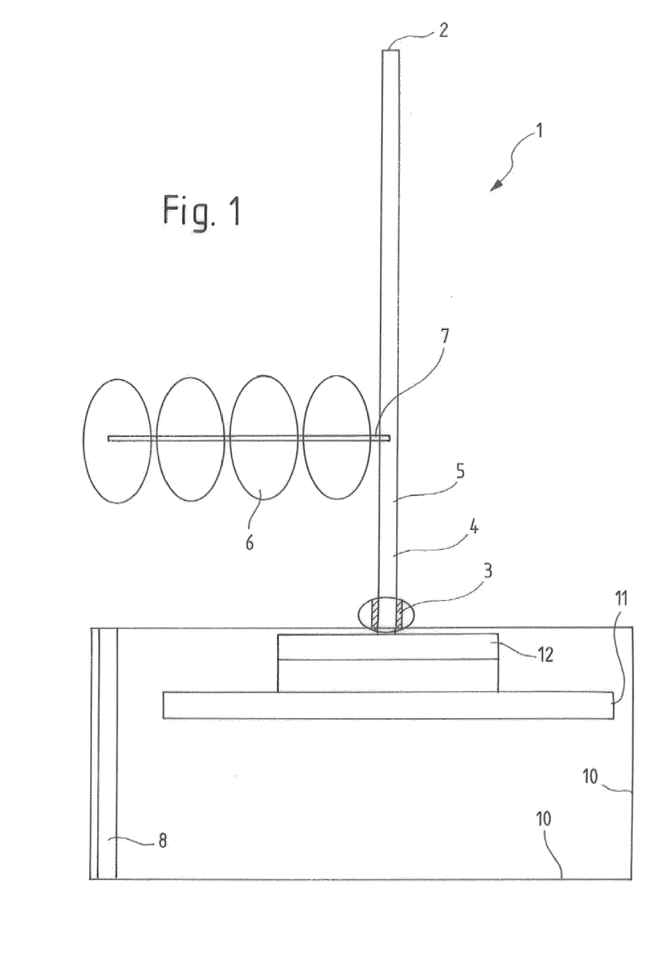

In Fig. 1 ist eine Windkraftanlage 1 dargestellt, die eine vertikale Achse 2 aufweist, um die sich als Windauffangflächen ausgebildete Halbschalen 6 drehen. Die Halbschalen sind an einer Nabe bzw. Rotornabe entlang der geometrischen Achse 2 angeordnet. Die geometrische Achse 2 wird bevorzugt hier mit einer Welle oder Antriebswelle 4 ausgebildet. Diese ist in einem Lager 3, insbesondere einem Kugellager in einem Gehäuse 10 gelagert. In dem Gehäuse 10 ist ein Getriebe 2 und darunter ein Generator oder Motor 11 angeordnet. In dem Gehäuse 10 ist auch ein Schaltschrank 8 vorgesehen, der die Elektronik zur Erzeugung des elektrischen Stroms aus der Windenergie aufnimmt. An der Welle 4 können über dort vorgesehene Gewindebohrungen 5 Hebelarme 7 befestigt werden, an denen die offenen Halbschalen 6 befestigt sind. Im vorliegenden Fall sind vier Halbschalen nebeneinander auf einem Hebelarm 7 angeordnet. Die Halbschalen sind im Querschnitt oval, wobei die länglichen Seiten der Halbschalen aneinander angrenzen.

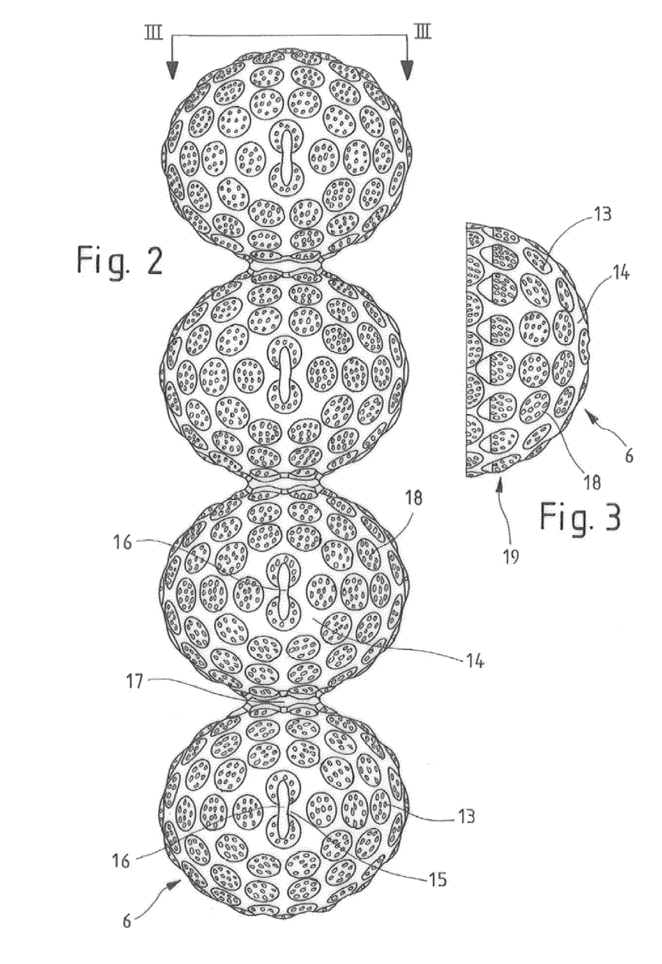

In Fig. 2 sind vier miteinander verbundene Halbschalen 6 dargestellt. In der Ansicht sind diese von ihrer windzugekehrten Seite zu sehen. Auf den Oberflächen sind Buckel 13 oder Erhebungen vorgesehen. Insgesamt ergibt sich ein schildkrötenpanzerartiges Gebilde, das einzelne buckelartige Erhebungen hat. Diese Buckel 13 sind kreisförmig bzw. bilden das obere Segment einer Kugel aus. Diese Vorsprünge sorgen für eine Verringerung des Luftwiderstandes und damit zu einer leichteren und schnelleren Drehbewegung der Halbschalen. Zwischen den Buckeln 13 sind glatte Bereiche 14 vorhanden. Ausgehend von einem Mittelpunkt 15 der Halbschalen sind die Buckel 13 ringartig um diesen Mittelpunkt 15 angeordnet. Zwei obere Buckel 15 sind in Querrichtung zu dem ovalen Querschnitt der einzelnen Halbschalen 6 mit einem im Spitzenbereich vorgesehenen Halteelement 16 versehen. Über die vier Halteelemente 16 hinweg erfolgt eine Befestigung an dem Hebelarm 7 aus Fig. 1. Die Halbschalen 6 sind daher auf ihrer windzugewandten Seite an dem Hebelarm 7 befestigt. Im Bereich ihrer Längsseiten sind die ovalen Halbschalen in einem Verbindungsbereich 17 miteinander verbunden. Der Durchmesser der Halbschale 6 ist in dieser Ausführungsform fünf- bis sechsmal größer als der Durchmesser eines Buckels 13. Besonders zu beachten ist hier, dass die Buckel 13 in sich strukturiert sind. Innerhalb jedes Buckels sind eine Vielzahl von hier mit Kreisen angedeuteten Dellen 18 vorgesehen. Diese sind nach Art eines Golfballes nach innen eingedellt und dienen zu einer weiteren Verringerung des Luftwiderstands. Die Buckel 13 haben dabei einen Durchmesser der um den Faktor 15 bis 20 größer ist als der Durchmesser der Dellen.

In Fig. 3 ist die Halbschale 6 in einer Ansicht entlang der Linie III - III in Fig. 2 gezeigt. Es ergibt sich also die Ansicht wie man sie beispielsweise in Fig. 1 vom linken Bildrand parallel zu dem Hebelarm 7 haben würde. Auf der linken Seite der Figur 3 ist die offene Seite der Halbschale 6 zusehen. Nach rechts ist die Drehrichtung der Halbschale 6. Hier sind auch die Dellen 18 innerhalb der Buckel 13 zu erkennen. Bei der zweituntersten Reihe 19 sind die Buckel 13 etwas anders ausgebildet, nämlich tropfenförmig in Bewegungsrichtung, wobei das langgezogene Ende dieser tropfenförmig ausgebildeten Buckel keine Dellen aufweist.

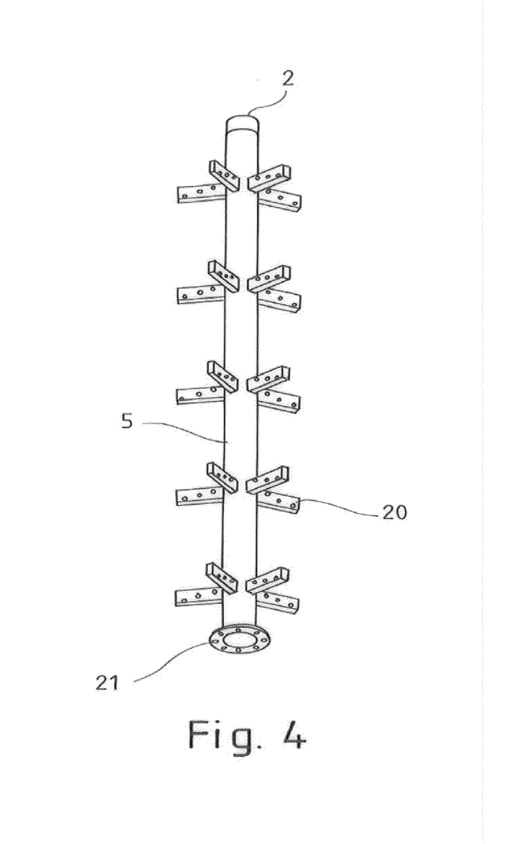

In Fig. 4 ist die Welle 5 dargestellt, die die vertikale Achse 2 ausbildet. An dieser sind Aufsteckverbindungen 20 angeordnet, auf denen die Hebelarme 7 befestigt werden. Am unteren Ende ist ein Flansch 21 vorgesehen. Dieser dient zur Verbindung mit dem unteren Teil der Welle, der sich innerhalb des Gehäuses 10 erstreckt. Hier sind in insgesamt fünf Ebenen Aufsteckverbindungen 20 vorgesehen, die an der Welle montiert, insbesondere angeschweißt sind.

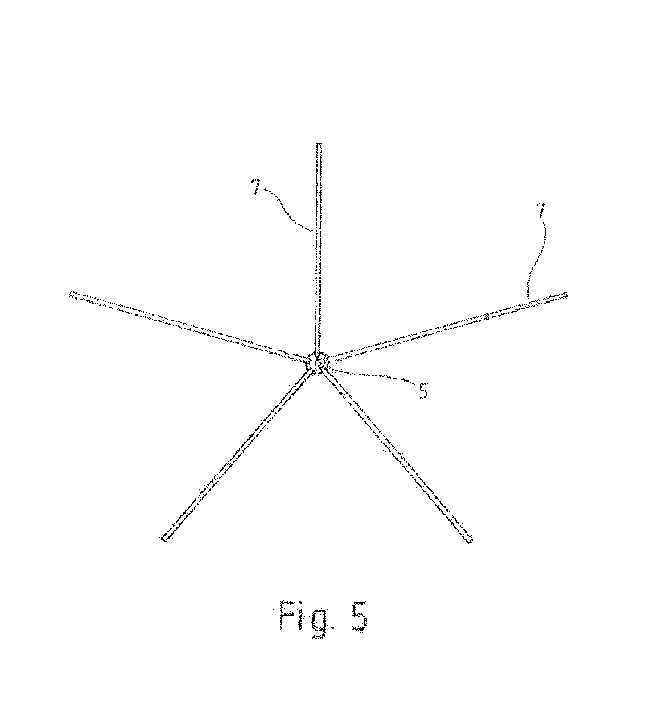

In Fig. 5 ist eine Draufsicht auf die Welle 5 mit den darauf angeordneten Hebelarmen 7 dargestellt. Es sind insgesamt fünf Hebelarme 7 auf die in Fig. 4 dargestellten Aufsteckverbindungen aufgebracht worden. An jedem dieser Hebelarme werden ein oder mehrere Halbschalen befestigt, insbesondere vier miteinander verbundene Halbschalen 6, so wie dies in Fig. 2 dargestellt ist. Die Hebelarme bestehen aus einem Hohlrohr mit rechteckigem Querschnitt.

## Patentansprüche

1. Windgenerator zur Erzeugung von Strom aus Wind mit einer vertikalen Drehachse (2), wobei an Hebelarmen (7) angebrachte Halbschalen (6) um die vertikale Achse (2) rotieren, **dadurch gekennzeichnet, dass** die Halbschalen (6) eine Vielzahl nach außen gerichteter Buckel (13) aufweisen die ringartig um das Zentrum (15) der Halbschale (6) angeordnet sind.

2. Windgenerator nach Anspruch 1, **dadurch gekennzeichnet, dass** die Buckel (13) etwa kreisförmig sind.

3. Windgenerator nach einem der Ansprüche 1 oder 2, **dadurch gekennzeichnet, dass** die Buckel (13) ein Segment einer Kugeloberfläche bilden.

4. Windgenerator nach einem der vorhergehenden Ansprüche, **dadurch gekennzeichnet, dass** jeder Buckel (13) mehrere Dellen (18) aufweist.

5. Windgenerator nach einem der vorhergehenden Ansprüche, **dadurch gekennzeichnet, dass** der Durchmesser der Halbschale (6) um den Faktor vier bis zehn, insbesondere um den Faktor fünf bis acht, größer ist als der Durchmesser eines Buckels (13).

6. Windgenerator nach einem der vorhergehenden Ansprüche, **dadurch gekennzeichnet, dass** der Durchmesser eines Buckels (13) um den Faktor zehn bis 30, insbesondere um den Faktor 15 bis 25, größer ist als der Durchmesser einer Delle (18).

7. Windgenerator nach einem der vorhergehenden Ansprüche, **dadurch gekennzeichnet, dass** die Halbschalen (6) im Querschnitt oval sind und im Bereich ihrer längeren Seiten miteinander verbunden sind.

8. Windgenerator nach einem der vorhergehenden Ansprüche, **dadurch gekennzeichnet, dass** mehrere miteinander verbundene Halbschalen (6) an einem horizontalen Hebelarm (7) angeordnet sind.

9. Windgenerator nach einem der vorhergehenden Ansprüche, **dadurch gekennzeichnet, dass** an einer vertikalen Antriebswelle (5) in einer Ebene fünf horizontale Hebelarme (7) angeordnet sind.

10. Windgenerator nach einem der vorhergehenden Ansprüche, **dadurch gekennzeichnet, dass** an der vertikalen Antriebswelle (5) in mehreren Ebenen Hebelarme (7) mit daran angeordneten Halbschalen (6) vorgesehen sind.

11. Windgenerator nach einem der vorhergehenden Ansprüche, **dadurch gekennzeichnet, dass** die Oberfläche (14) der Halbschalen (6) zwischen den Buckeln (13) glatt ist.

12. Windgenerator nach einem der vorhergehenden Ansprüche, **dadurch gekennzeichnet, dass** die Innenseite der Halbschalen (6) glatt und unstrukturiert ist.

13. Windgenerator nach einem der vorhergehenden Ansprüche, **dadurch gekennzeichnet, dass** die Buckel (13) tropfenförmig in Bewegungsrichtung ausgebildet sind, wobei das langgezogene Ende dieser tropfenförmigen Buckel keine Dellen aufweist.
